# EUROPEAN PATENT APPLICATION

(11) **EP 3 163 978 A1**
(43) Date of publication of application: **03.05.2017**
(21) Application number: 15811776.2
(22) Date of filing: 24.06.2015
(51) Int. Cl.: H05B 6/12, A47J 37/12, A47J 36/24

(54) **INDUCTION HEATING TYPE OF FRYER**

(30) Priority: 24.06.2014 KR 20140077650
(71) Applicant: Dipo Induction Co., Ltd., Hanam-si, Gyeonggi-do 465-120 (KR)
(72) Inventor: HUR, Jin Sook, Namyangju-si Gyeonggi-do 472-709 (KR)
(74) Representative: Ter Meer Steinmeister & Partner
(86) International application number: PCT/KR2015/006407
(87) International publication number: WO 2015/199433

(57) **Abstract**

Disclosed is a frying machine using an induction heating method. A frying machine using an induction heating method according to an embodiment of the present disclosure includes a case; an oil storage tank that includes a cooking area which is formed inside the case such that an upper portion thereof is opened and in which frying oil is accommodated and an object to be fried is fried, and a carbonization preventing area which is formed below the cooking area and in which frying oil having a relatively low temperature as compared with that of the cooking area is located; an induction heating part that includes an induction heating coil which is formed outside the oil storage tank to surround at least a portion of the cooking area and heats the frying oil using an induction heating method; and a control unit that controls a temperature of the induction heating coil.

## Description

### Technical Field

The present disclosure relates to a frying machine for cooking foods and, more particularly, to a frying machine using an induction heating method, which heats frying oil using an induction heating method by an induction heating coil.

### Background Art

In general, an induction range using an induction heating method may achieve energy efficiency of about 85%.

Thus, the induction range boasts remarkably excellent thermal efficiency as compared with a gas range, a highlight range, a hot plate and the like which have energy efficiency of about 30-40%.

Further, the induction range has little risk of fire and does not discharge harmful gas, is thus being spotlighted as an environment-friendly and high quality cooking tool, and has been widely used mainly in large-sized restaurants, hotels, and the like.

The conventional gas fryer and the conventional electric fryer using an electrical heating method have some obstacle factors in implementing cooking.

In frying, when a precise temperature control and a temperature restoring force are achieved, frying oil is not absorbed so that crispy, delicious, and healthy frying foods can be obtained.

Further, carbides in frying residues rapidly acidify the frying oil and is thus harmful to health, and shorten a lifespan of the frying oil and is thus not economical.

### Detailed Description of the Invention

### Technical Problem

The present disclosure is conceived to solve the above-described problems, and aspects of the present disclosure will be described below.

First, the present disclosure may provide a frying machine using an induction heating method, which may prevent foods from being scorched and stuck to a surface of a heating part and being carbonized and does not burn residues to lengthen a lifespan of the frying oil.

Second, the present disclosure provides a frying machine using an induction heating method, which may easily separate sediments and of which the inside is easily cleaned.

Third, the present disclosure provides a frying machine using an induction heating method, which may an electric device such as a control unit from being affected by an induction heating coil of the frying machine.

Fourth, the present disclosure provides a frying machine using an induction heating method, which may prevent frying oil from being excessively heated at a predetermined temperature or higher.

Problems of the present disclosure are not limited to the above-described problems, and other not-described problems could be clearly understood by those skilled in the art with reference to the following descriptions.

### Technical Solution

In order to achieve the above aspects, a frying machine using an induction heating method according to an embodiment of the present disclosure includes a case, an oil storage tank, a coil base, an induction heating coil and a control unit.

The case forms an outer appearance.

The oil storage tank is formed inside the case such that an upper portion thereof is opened, accommodates frying oil, and includes a cooking area in which an object to be fried is fried and a carbonization preventing area in which frying oil having a relatively low temperature as compared with that of the cooking area is located.

The induction heating part includes an induction heating coil that is arranged outside the oil storage tank to surround at least a portion of the cooking area and heats the frying oil using an induction heating method.

The control unit controls the temperature of the induction heating coil.

Water is filled in a lower portion of the frying oil that is located in the carbonization prevention area, and sediments, such as residues, which are generated during frying may sink into the water.

The cooking area and the carbonization prevention area are partitioned from each other by a net-shaped lower grill that is formed between the cooking area and the carbonization prevention area, and the object to be fried may be prevented from being introduced into the carbonization prevention area by the lower grill.

A basket having a net shape having an interval narrower than that of the lower grill is formed at the lower portion of the lower grill so that the sediment, such as residues, which are generated during frying may sink into the basket.

A heat insulator for preventing heat of the oil storage tank being transferred to the induction heating part may be formed between the oil storage tank and the induction heating part.

The heat insulator may be formed of a mixture of blankets formed of heat-resistant reinforced fiber and inorganic particles having pores in nano units.

A shielding block for preventing elements other than the oil storage tank from being affected by the induction heating coil may be formed between the induction heating coil and the case.

The induction heating part further includes a coil base on which the induction heating coil is wound, and a coil insertion groove that has a length formed along a circumference of the coil base and is upward inclined as it inward goes may be formed on an outer surface of the coil base.

The induction heating part may be spaced apart from an upper end of the cooking area.

At least one of side surfaces of the carbonization prevention area may be inwardly inclined as it goes downward, to prevent the sediments from being stagnated.

An oil drainage that is connected to the outside may be formed on a bottom surface of the carbonization preventing area.

An air communicating passage is formed between the case and the oil storage tank, and the frying machine may further include a blowing fan for transferring air passing through the air passage by pressure.

The control unit may be configured to heat only a portion of the induction heating coil based on an input temperature or a user's need.

A temperature measuring sensor that measures a temperature of the frying oil is provided, and the control unit lowers a temperature of the induction heating coil before a temperature input from the temperature measuring sensor arrives at a predetermined temperature.

For example, the control unit may output a signal to lower the temperature of the induction heating coil when the temperature of the frying oil measured by the temperature measuring sensor is lower than the predetermined temperature by a specific temperature.

Otherwise, the control unit may output the signal to lower the temperature when the temperature of the frying oil measured by the temperature measuring sensor is lower than the predetermined temperature by a specific ratio.

### Advantageous Effects

The above-described effects of the present disclosure will be described below.

First, according to a frying machine using an induction heating method according to an embodiment of the present disclosure, a carbonization preventing area in which frying oil having a relatively low temperature is located is formed in an oil storage tank, so that foods may be prevented from being scorched and stuck to a surface of a heating part and being carbonized. Further, residues are not burn so that a lifespan of the frying oil may be lengthened.

Second, according to the frying machine using an induction heating method according to the embodiment of the present disclosure, because there is no structure within the oil storage tank, washing and management of the inside of the oil storage tank are easy. Further, a basket having a net shape having a narrow interval is formed below a lower grill and sediments that are generated during frying are collected in the basket. Thus, because the sediments may be removed when the basket is taken out from the oil storage tank, it is easy to remove the sediments.

Third, according to the frying machine using an induction heating method according to the embodiment of the present disclosure, a shielding block is formed between an induction heating coil and a case to prevent elements other than the oil storage tank, especially, an electric device such as a control unit from being affected by a magnetic field of the induction heating coil.

Fourth, according to the frying machine using an induction heating method according to the embodiment of the present disclosure, a temperature of the induction heating coil is lowered before a temperature of the frying oil arrives at a predetermined temperature, so that the frying oil is prevented from being excessively heated to the predetermined temperature of higher.

Effects of the present disclosure are not limited to the above-described effects, and other not-mentioned effects could be clearly understood by those skilled in the art with reference to the appended claims.

### Brief Description of the Drawings

Detailed descriptions of exemplary embodiments of the present application, which will be made below and the abstract which has been described above could be understood better when being read with referece to the accompanying drawings. The exemplary embodiments are illustrated in the drawings to exemplify the present disclsoure. However, it should be understood that the present application is not precisely limited to illustrated arrangement and means.
FIG. 1 is a perspective view illustrating a frying machine using an induction heating method according to an embodiment of the present disclosure;
FIG. 2 is a schematic view illustrating the frying machine using an induction heating method according to the embodiment of the present disclosure;
FIG. 3 is a view illustrating a lower grill of the frying machine using an induction heating method according to the embodiment of the present disclosure;
FIG. 4 is a view illustrating a state in which a basket is provided at a lower portion of the lower grill of the frying machine using an induction heating method according to the embodiment of the present disclosure; and
FIG. 5 is a view illustrating arrangement of an induction heating part, a heat insulator and a shielding block of the frying machine using an induction heating method according to the embodiment of the present disclosure.

### Mode for Carrying Out the Invention

Terms and words used in the present specification and claims should not be interpreted as being limited to general or bibliographical meanings, and should be interpreted as meanings and concepts matched with the technical spirits of the present disclosure based on a principle in which an inventor could properly define concepts of the terms to optimally describe his/her invention. Further, embodiments described in the present specification and configurations illustrated in the accompanying drawings merely correspond to the most preferable embodiment of the present disclosure, and do not represent all the technical spirits of the present disclosure. Thus, it should be understood that there may be various equivalents and modifications for which they may be substituted at a time of the present application.

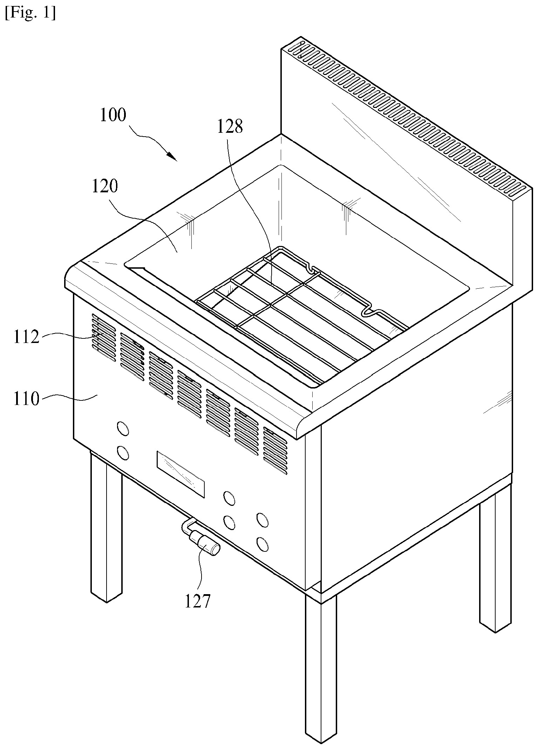

Hereinafter, referring to FIGS. 1 to 5, a frying machine using an induction heating method according to an embodiment of the present disclosure will be described according to an embodiment of the present disclosure.

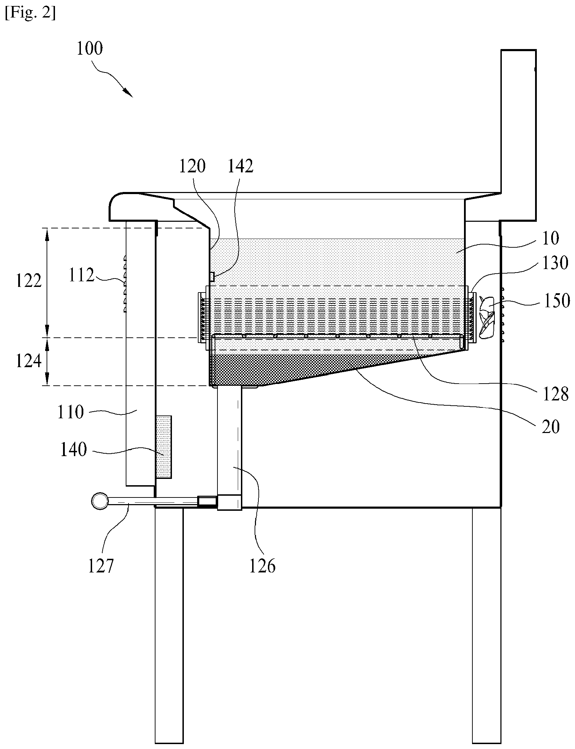

FIG. 1 is a perspective view illustrating a frying machine using an induction heating method according to the embodiment of the present disclosure, and FIG. 2 is a schematic view illustrating the frying machine using an induction heating method according to the embodiment of the present disclosure.

As illustrated in FIGS. 1 and 2, the frying machine using an induction heating method according to the embodiment of the present disclosure includes a case 110, an oil storage tank 120, an induction heating part 130 and a control unit 140.

The case 110 forms an entire outer appearance and has the oil storage tank 120 formed therein such that a power supply unit (not illustrated) for supplying electric power to an induction heating coil 132, a blowing fan 150 and the like are accommodated therein. A ventilation hole 112 through which air within the case 110, which becomes hot by heating frying oil 10, may be discharged to the outside may be formed on at least one side of the case 110.

An air communicating passage is formed between the case 110 and the oil storage tank 120 which will be described below, and a blowing fan 150 that may move air of the air communicating passage to the outside is formed. The air moved by the blowing fan 150 may be discharged to the outside through the ventilation hole 112 formed in the case 110.

Thus, it is preferred that heat that is transferred from the oil storage tank 120 which will be described below is effectively discharged to the outside through the heated frying oil 10 so that elements within the case 110 may be prevented from being damaged by heat.

The oil storage tank 120 is formed inside the case 110 such that an upper portion thereof is opened and accommodates the frying oil 10 therein. Further, the oil storage tank 120 includes a cooking area 122 in which an object to be fried is fried and a carbonization preventing area 124 formed below the cooking area 122, in which the frying oil 10 having a relatively low temperature as compared with that of the cooking area 122 is located.

As illustrated in FIGS. 1 and 2, a lower grill 128 for preventing fried foods from being introduced into the carbonization preventing area 124, and at the same time introducing frying residues into the carbonization preventing area 124 may be formed between the cooking area 122 and the carbonization preventing area 124. In other words, the cooking area 122 and the carbonization preventing area 124 may be partitioned by the lower grill 128. The lower grill 128 will be described in detail.

The cooking area 122 is an element in which frying is performed, and the induction heating part 130 which will be described below may be arranged at at least a portion of an outer side of the cooking area 122. All wall surfaces of the cooking area 122 may be vertically formed. In particular, the wall surfaces of the cooking area 122 are directly heated by the induction heating part 130 which will be described below, and it is concerned that foods may be scorched and stuck thereto. Thus, it is preferred that the wall surfaces are vertically formed to prevent the sticking of foods.

Further, the frying oil 10 having a relatively low temperature is located in the carbonization preventing area 124 and residues that are generated during frying may sink thereinto. Meanwhile, a general frying machine has problems in that, because heating is performed at a lower portion thereof, a lower bottom surface and wall surfaces thereof may be blackly burned and sunken sediments may be prevented from being carbonized and scorched and stuck.

In the present disclosure, the carbonization preventing area 124 having a relatively low temperature is formed below the cooking area 122, so that carbonization and scorching of the sediments are suppressed.

Otherwise, water 20 is filled in a lower portion of the frying oil 10 located in the carbonization preventing area 124, and thus, sediments, such as residues, which are generated during frying may sink into the water 20. The frying oil 10 located in the carbonization preventing area 124 has a temperature of about 70-80 degrees, and the water 20 may have a temperature that is lower than that of the frying oil 10 that is located in the carbonization preventing area 124 due to a specific heat thereof that is lower than that of oil.

In this way, the water 20 is filled in a lower portion of the carbonization preventing area 124, so that the frying oil 10 is cooled by the water 20 having a relatively low temperature as compared with the frying oil 10. Further, the sediments, such as residues, which are generated during frying may sink into the water 20, so that the sediments may be prevented from being carbonized and scorched and stuck to a wall surface of the oil storage tank 120.

At least one surface among side surfaces of the carbonization preventing area 124 may be inclined. Further, an oil drainage 126 is connected to a lower portion of the carbonization preventing area 124. Otherwise, although not illustrated, a storage tank (not illustrated) that receives the sediments such as frying residues and carbides and discharges them to the oil drainage 126 may further formed between the carbonization preventing area 124 and the oil drainage 126.

An inclined surface of the carbonization preventing area 124 is downwardly inclined towards the oil drainage 126 so that the frying oil 10 and the sediments may be smoothly discharged to the oil drainage 126 by the inclined wall. A valve that opens and closes the oil drainage 126 is formed in the oil drainage 126 and a handle 127 connected thereto is formed in the valve to extend to the outside of the case 110. Accordingly, a user may easily discharge the frying oil 10 within the oil storage tank 120 by placing a container, which may receive wasted frying oil 10, below the oil drainage 126 and turning the handle 127.

Further, when the oil drainage 126 is arranged on a front surface of the frying machine 100, convenience of a discharging operation of the frying oil 10 may be improved.

However, a position of the oil drainage 126 is not limited to the above-described position, and the oil drainage 126 may be located on a rear surface or a side portion of the frying machine.

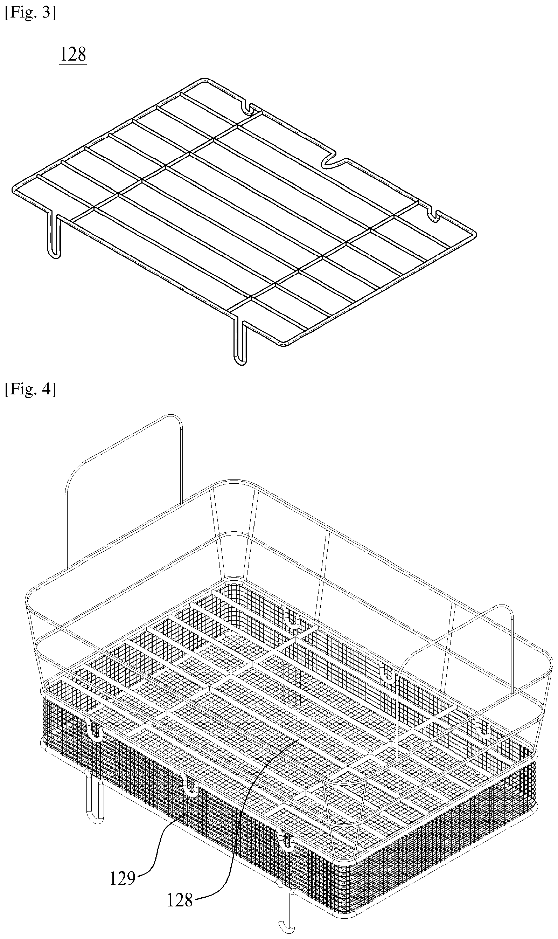

FIG. 3 is a view illustrating a lower grill of the frying machine using an induction heating method according to the embodiment of the present disclosure.

Referring to FIG. 3, as described above, the lower grill 128 may have a net shape. Further, the lower grill 128 may be formed between the cooking area 122 and the carbonization preventing area 124 to prevent fried foods from being introduced into the carbonization preventing area 124, and at the same time to introduce frying residues into the carbonization preventing area 124.

The lower grill 128 may be insertably formed within the oil storage tank 120 as illustrated in FIG. 3 or may be fixed to the interior of the oil storage tank 120 although not illustrated.

Further, although an example where the lower grill 128 has a flat shape is illustrated in the drawings, a shape of the lower grill 128 is not limited thereto, and the lower grill 128 may have various shapes such as a lattice basket shape as long as they allow frying residues to be moved to the carbonization preventing area 124.

FIG. 4 is a view illustrating a state in which a basket is provided below the lower grill of the frying machine using an induction heating method according to the embodiment of the present disclosure.

Meanwhile, a basket 129 having a net shape, an interval of which is narrower than that of the lower grill 128, is formed below the lower grill 128 so that the sediments, such as residues, which are generated during frying may sink into the basket 129.

The basket 129 may be located in the carbonization preventing area 124, and all surfaces of the basket 129 are formed to have a mesh shape having a very narrow interval so that the sediments may sink into a bottom of the basket 129 and the frying oil 10 or the water 20 may move between meshes.

Further, a handle may be formed in the lower grill 128 such that the lower grill 128 and the basket 129 may be easily removed from the oil storage tank 120.

Thus, after frying is completely terminated, when the lower grill 128 connected to the basket 129 is separated from the oil storage tank, the completed object to be fried and the sediments may be taken out at once. Accordingly, the sediments may be easily removed.

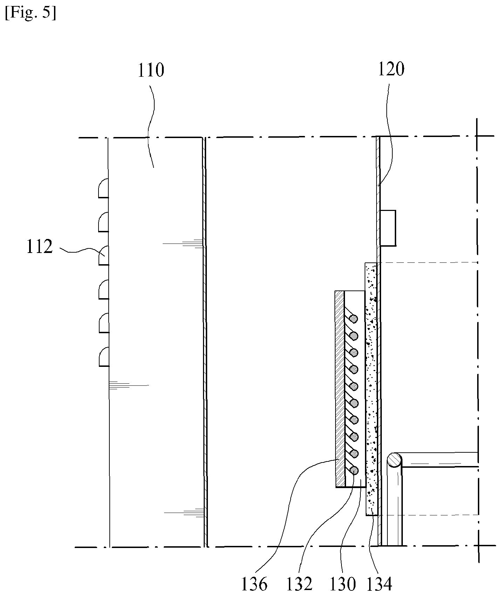

FIG. 5 is a view illustrating arrangement of an induction heating part, a heat insulator and a shielding block of the frying machine using an induction heating method according to the embodiment of the present disclosure.

The induction heating part 130 includes an induction heating coil 132 that is arranged outside the oil storage tank 120 to surround at least a portion of the cooking area 122 and heats the frying oil 10 using an induction heating method.

In the present embodiment, the induction heating part 130 is arranged outside the cooking area 122 so that a separate structure within the oil storage tank 120 is not required. Thus, washing and management of wall surfaces or a bottom surface of the oil storage tank 120 are easy.

Further, a heating method using the induction heating coil 132 has an advantage in that because a heating calorie thereof may be controlled by adjusting an induced current, the temperature of the frying oil 10 may be more precisely controlled.

The induction heating part 130 may be spaced apart from an upper end of the cooking area 122. That is, the induction heating part 130 is located at a central portion of the oil storage tank 120. Such a structure may have a circulation in which as a central portion of the oil storage tank is heated, the frying oil 10 having a high temperature is raised to an upper portion of the cooking area 122 and the frying oil 10 having a relatively low temperature is moved to the carbonization preventing area 124.

The induction heating part 130 further includes a coil base on which the induction heating coil 132 is wound, and a coil insertion groove that has a length formed along a circumference of the coil base and is upwardly inclined as it goes inward may be formed on an outer surface of the coil base.

That is, the frying machine 100 of the present embodiment has a structure in which a coil base 138 is arranged between a wall surface of the oil storage tank 120 and a wall surface of the case 110 and the induction heating coil 132 is wound on the coil base 138.

The coil base 138, which is attached to the outside of the cooking area 122 of the oil storage tank 120 , may be formed of synthetic resin that does not affect electromagnetic induction.

However, a material and a shape of the coil base 138 are not limited to the above-described material and shape, and the coil base 138 may have various materials and various shapes.

Meanwhile, a shielding block 136 may be arranged between the induction heating coil 132 and the wall surface of the case 110. The shielding block 136 may serve to prevent the case 110 from being heated by the induction heating coil 132 and to prevent elements other than the oil storage tank 120 from being affected by an electromagnetic field of the induction heating coil 132. Further, the shielding block 136 may also prevent electrical equipment that is provided inside the case 110, such as the control unit 140 which will be described below, from being damaged by heat or an electromagnetic field of the induction heating coil 132.

In the present embodiment, the shielding block 136 may be formed of ferrite that corresponds to magnetic ceramics. However, a material of the shielding block 136 is not limited to the ferrite, and any materials that may prevent the electromagnetic field of the induction heating coil 132 from being transferred to the case 110 may be applied thereto.

Although not illustrated in the drawings, a holder that fixes the shielding block 136 may be formed in the coil base 138. The holder may be detachably formed in the coil base 138 or may be formed integrally with the coil base 138.

Further, a heat insulator 134 may be formed between the induction heating part 130 and the wall surface of the oil storage tank 120. Accordingly, the wall surface of the oil storage tank 120 that is heated by the induction heating coil 132 may be prevented from damaged or the induction heating coil 132 may be prevented from being damaged as heat of the heated frying oil 10 is transferred to the induction heating oil 132 again.

It is preferred that the heat insulator 134 is formed of a material that does not affect an electromagnetic induction phenomenon and may achieve sufficient heat insulation performance using a thin thickness.

In detail, the heat insulator 134 may be form in which inorganic particles having pores in nano units are mixed with blankets formed of a heat-resistant reinforced fiber material.

The heat insulator 134 in which the heat-resistant reinforced fiber blankets and the inorganic particles having pores in nano units are mixed with each other has advantages in that the heat insulator 134 is flexible and lightweight, and may be easily cut.

Meanwhile, the control unit 140 controls a temperature of the induction heating coil 132.

The control unit 140 may be configured to heat only a portion of the induction heating coil 132 based on an input temperature or a user's need. For example, when the input temperature is very high, electric power is applied to all the induction heating coil 132, and when the input temperature is relatively low, electric power is applied only to a portion of the induction heating coil 132, and thus, power consumption may be reduced.

Further, a temperature measuring sensor 142 that measures the temperature of the frying oil 10 may be formed on one side of the oil storage tank 120. Further, the control unit 140 may perform a predictive control such that the temperature of the induction heating coil 132 is lowered before the temperature input from the temperature measuring sensor 142 arrives at a predetermined temperature.

This is because the frying oil 10 may be excessively heated to the predetermined temperature or higher by remaining heat when the temperature of the induction heating coil 132 is lowered after the temperature input from the temperature measuring sensor 142 becomes equal to the predetermined temperature. When the frying oil 10 is excessively heated to the predetermined temperature or higher, the inside of fried food may not be fully cooked and only the outside thereof is burned.

When the temperature of the frying oil 10 measured by the temperature measuring sensor 142 is lower than the predetermined temperature by a specific temperature, the control unit 140 may output a signal to lower the temperature of the induction heating coil 132.

For example, when the temperature of the frying oil 10 measured by the temperature measuring sensor 142 is lower than the predetermined temperature by 20 °C, if the control unit 140 is set to output the signal to lower the temperature of the induction heating coil 132, when the user sets a heating temperature of the frying oil 10 as 250 °C, if a temperature of 230 °C is measured by the temperature measuring sensor 142, the control unit 140 may output the signal to lower the temperature of the induction heating coil 132.

Otherwise, when the temperature of the frying oil 10 measured by the temperature measuring sensor 142 is lower than the predetermined temperature by a specific temperature, the control unit 140 may output the signal to lower the temperature of the induction heating coil 132.

For example, when the temperature of the frying oil 10 measured by the temperature measuring sensor 142 is lower than the predetermined temperature by 10%, if the control unit 140 is set to output the signal to lower the temperature of the induction heating coil 132, when the user sets a heating temperature of the frying oil 10 as 250 °C, if a temperature of 225 °C is measured by the temperature measuring sensor 142, the control unit 140 may output the signal to lower the temperature of the induction heating coil 132.

Otherwise, when the temperature of the frying oil 10 measured by the temperature measuring sensor 142 is higher than the predetermined temperature by a specific temperature, the control unit 140 may stop an operation of the induction heating coil 132 to prevent fire.

It should be understood that the above-described embodiments are exemplary and not limitative, and the scope of the present disclosure will be represented not by the above descriptions but by the appended claims. Further, it should be interpreted that the scope of the present disclosure includes the meanings and the ranges of the appended claims and all changes and modifications derived from equivalent concepts thereof as well.

## Claims

1. A frying machine using an induction heating method, the frying machine comprising:
a case;
an oil storage tank that comprises a cooking area which is formed inside the case such that an upper portion of the cooking area is opened and in which frying oil is accommodated and an object to be fried is fried, and a carbonization preventing area which is formed below the cooking area and in which frying oil having a relatively low temperature as compared with that of the cooking area is located;
an induction heating part that comprises an induction heating coil which is formed outside the oil storage tank to surround at least a portion of the cooking area and heats the frying oil using an induction heating method; and
a control unit that controls a temperature of the induction heating coil.

2. The frying machine of claim 1, wherein water is filled in a lower portion of the frying oil located in the carbonization preventing area, and sediments, such as residues, which are generated during frying, sink into the water.

3. The frying machine of claim 1, wherein the cooking area and the carbonization preventing area is partitioned from each other by a net-shaped lower grill, and the object to be fried is prevented from being introduced into the carbonization preventing area by the lower grill.

4. The frying machine of claim 3, wherein a net-shaped basket having a narrower interval than that of the lower grill is formed below the lower grill, so that sediments, such as residues, which are generated during frying, sink into the basket.

5. The frying machine of claim 1, wherein a heat insulator for preventing heat of the oil storage tank from being transferred to the induction heating part is formed between the oil storage tank and the induction heating part.

6. The frying machine of claim 5, wherein the heat insulator is formed of a mixture of blankets formed of heat-resistant reinforced fiber and inorganic particles having pores in nano-units.

7. The frying machine of claim 1, wherein a shielding block for preventing elements other than the oil storage tank from being affected by an electromagnetic field of the induction heating coil is formed between the induction heating coil and the case.

8. The frying machine of claim 1, wherein the induction heating part further comprises a coil base on which the induction heating coil is wound, and
wherein a coil insertion groove that has a length formed along a circumference of the coil base and is upwardly inclined as it inwardly goes is formed on an outer surface of the coil base.

9. The frying machine of claim 1, wherein the induction heating part is spaced apart from an upper end of the cooking area.

10. The frying machine of claim 1, wherein at least one of side surfaces of the carbonization preventing area is inwardly inclined as it downwardly goes, to prevent sediments from being stagnated.

11. The frying machine of claim 1, wherein an oil drainage that is connected to an outside is formed on a bottom surface of the carbonization preventing area.

12. The frying machine of claim 1, wherein an air communicating passage is formed between the case and the oil storage tank, and
wherein the frying machine further comprises a blowing fan for transferring air that passes through the air communicating passage.

13. The frying machine of claim 1, wherein the control unit is configured to heat only a portion of the induction heating coil based on an input temperature or a user's need.

14. The frying machine of claim 1, wherein a temperature measuring sensor that measures a temperature of the frying oil is formed, and
wherein the control unit lowers a temperature of the induction heating coil before a temperature input from the temperature measuring sensor arrives at a predetermined temperature.

15. The frying machine of claim 14, wherein the control unit outputs a signal to lower the temperature of the induction heating coil when the temperature of the frying oil measured by the temperature measuring sensor is lower than the predetermined temperature by a specific temperature.

16. The frying machine of claim 14, wherein the control unit outputs a signal to lower the temperature of the induction heating coil when the temperature of the frying oil measured by the temperature measuring sensor is lower than the predetermined temperature by a specific ratio.
